## Europäisches Patentamt

## European Patent Office

## Office européen des brevets

(11) Veröffentlichungsnummer: **0 140 819**

**B1**

(12) **EUROPÄISCHE PATENTSCHRIFT**

(45) Veröffentlichungstag der Patentschrift:
**17.12.86**

(51) Int. Cl.⁴: **B 65 G 53/52**

(21) Anmeldenummer: **84710031.0**

(22) Anmeldetag: **12.09.84**

(54) Vorrichtung zur Herstellung einer Verbindung zwischen zwei pneumatischen Saugförderleitungen.

(30) Priorität: **21.09.83 DE 3334076**

(43) Veröffentlichungstag der Anmeldung:
**08.05.85 Patentblatt 85/19**

(45) Bekanntmachung des Hinweises auf die Patenterteilung:
**17.12.86 Patentblatt 86/51**

(84) Benannte Vertragsstaaten:
**AT CH DE FR IT LI NL**

(56) Entgegenhaltungen:
**DE-C-2 824 484**

(73) Patentinhaber: **Hartmann Fördertechnik GmbH, Kaiserleistrasse 43, D-6050 Offenbach (DE)**

(72) Erfinder: **Haidlen, Götz, Dipl.- Ing., Nordweststrasse 27, D-6057 Dietzenbach (DE)**
Erfinder: **Gröpl, Edmund, Ing. grad., Schillerstrasse 69, D-6052 Mühlheim (DE)**

(74) Vertreter: **Munderich, Paul, Dipl.- Ing., Frankfurter Strasse 84, D-6466 Gründau- Rothenbergen (DE)**

### Beschreibung

Die Erfindung betrifft eine Vorrichtung zur Herstellung einer Verbindung zwischen zwei pneumatischen Saugförderleitungen, die in beliebigem Winkel zueinander angeordnet sind.

Durch die DE-C- 2 824 484 ist eine Absaugeanlage bekannt geworden, deren Kriterien unter anderem darin bestehen, daß ein an einer Brücke eines Portals angeordneter Abschnitt der längenveränderlichen Abluftleitung zumindest mit zwei verschwenkbaren, zur Sammelabluftleitung ausgerichteten Gliedern ausgebildet ist, wobei eine vorteilhafte Ausbildung darin gesehen wird, daß die an dem Portal angeordnete, längenveränderliche Abluftleitung bzw. deren Glieder durch starre, S-förmig ausgebildete, gegeneinander verdrehbare Rohrleitungen verbunden sind.

Nachteilig an dieser Ausbildung ist, daß im Hinblick auf die im allgemeinen bei diesen Anlagen erforderliche große Ausladung der in aller Regel zweigliedrigen Verbindungsleitung ein relativ großer Abstand zwischen den Anschlußmöglichkeiten an der Sammelabluftleitung notwendig ist.

Des weiteren erfordert die Ausbildung der einzelnen, zueinander verdrehbaren Glieder dieser Verbindungsleitung im Interesse der Vermeidung von Saugverlusten eine relativ hohe Präzisionsstufe für die beiden verdrehbaren S-Bogen und eine exakte Ausrichtung des senkrechten Teiles der Verbindungsleitung zu den Anschlüssen der Sammelabluftleitung, da die einzelnen Glieder nach ihrer Einstellung zueinander - wie erwähnt - nicht beweglich sind und lediglich durch nachführende Korrekturen, die in der Regel die Portaleinstellung einschließen, deren spannungslose Verbindung ermöglicht wird.

Zusammengefaßt ist festzuhalten, daß die mit einer solchen Anlage, von einer Einstellung ausgehend, erfaßbaren Fläche relativ - aufgrund des Abstandes der Verbindungsmöglichkeiten - gering ist. Die Ankupplung der Verbindungsleitungen an die Anschlußstutzen der Sammelabsaugeleitung ist auch bei guter Ausrichtung der Anschlußstellen zueinander praktisch nicht zu automatisieren. Da darüber hinaus zumindest ein Ventil stets offen sein muß, um den Saugluftstrom nicht abreißen zu lassen, kann eine erhebliche Länge dieser Konstruktion nicht vermieden werden. Im übrigen sind eine Vielzahl gesteuerter Ventile oder dgl. Mittel für die Öffnung bzw. den Verschluß der Anschlußstutzen erforderlich. Diese können einen wesentlichen Kostenfaktor und bei der oftmals gegebenen Störanfälligkeit auch einen hohen Wartungs- und Reparaturaufwand verursachen.

Dies berücksichtigend ist es Aufgabe dieser Erfindung, eine Vorrichtung nach der eingangs beschriebenen Art zu nennen, die den Abstand der möglichen Verbindungsstellen von jeweils zwei einander zugeordneten Saugförderleitungen auf der weiterführenden Saugleitung auf ein Minimum beschränkt oder diesen praktisch aufhebt die die Vielzahl der zu steuernden Ventile durch ein sich selbst steuerndes System ersetzt, die Ausrichtung der zu verbindenden Saugleitungen wesentlich erleichtert und die Wartungs- und Reparaturerfordernisse, auch in Verbindung mit der Vermeidung hoher Präzisionsstufen, zumindest in einem hohen Maße einschränkt.

Die erfindungsgemäße Lösung dieser Aufgabe sieht vor, daß eine erste der beiden Saugförderleitungen als ein gerades, mit einer nach oben gerichteten planen oder leicht gewölbten Fläche ausgerüstetes Rohr, das mit einer Vielzahl von Öffnungen versehen ist, ausgebildet ist,

daß die Öffnungen, in Verbindung mit einer systembedingten Unterdruckeinstellung durch ein flexibles Abdeckband abgedichtet sind,

daß ein die zweite Saugförderleitung tragender Verbindungswagen mit seinen beiden Unterrollen auf dem Abdeckband aufsteht und dieses über zumindest eine achsparallele Umlenkstelle in einem den beiden Unter Rollen entsprechenden Wegstreckenmaß abhebt,

daß die zweite Saugförderleitung in dem zwischen den Unterrollen und der (den) achsparallelen Umlenkstelle(n) gebildeten Freiraum über mechanische oder elastische Glieder beweglich angeordnet ist und durch Gleitführungen mit einem Teil der Saugöffnungen in Verbindung steht, und

daß der Verbindungswagen längs der Achse der ersten Sangförderleitung ohne Unterbrechung des Unterdruckes an jede beliebige Stelle dieser Sansförderleitung verfahrbar ist.

Das mit einer planen oder leicht gewölbten, mit Öffnungen versehenen Fläche ausgebildete Rohr erlaubt durch die Abdeckung der Öffnungen mit einem flexiblen Abdeckband in Verbindung mit dem gegebenen Unterdruck den ventilartigen, sich selbst steuernden Verschluß der Öffnungen. Diese sind in der Regel zylindrisch oder auch in Form von beliebig lang ausgebildeten Schlitzen eingebracht, wobei der minimale Abstand zwischen den öffnungen lediglich durch die zulässige statische Schwächung des Rohrquerschnittes bestimmt ist.

Dem Abdeckband steht der die zweite, im allgemeinen zur Absaugestelle gerichtete Verbindungsleitung tragende Verbindungswagen mit seinen in praktisch beliebigem Abstand anordnungsbaren Unterrollen auf und hebt dieses durch die achsparallel angeordnete Umlenkung über eine dem Achsabstand der Unterrollen entsprechende Länge, bei Aufhebung des Ventilverschlusses der auf dieser Wegstrecke liegenden Saugöffnungen,der ersten Saugförderleitung ab. Bei Verfahren des Wagens werden die Öffnungen zumindest wieder partiell durch das Abdeckband verschlossen und andere innerhalb des Achsabstandes der Unterrollen liegende Öffnungen freigegeben.

Innerhalb des durch die Unterrollen von der Umlenkstelle durch das Abdeckband gegebenen Freiraumes ist die vorzugsweise elastische Anordnung des strömungsumlenkend ausgebildeten Übergabekastens von der zweiten Saugförderleitung in die erste Saugförderleitung vorgesehen, wobei der Anschluß der zweiten Förderleitung zur weiterführenden Leitung in praxi rechtwinklig zur ersten Saugförderleitung angeordnet ist.

Durch die bewegliche Anordnung des umlenkenden Übergabekastens erübrigt sich das mühsame, lagebedingte Einstellen der zu verbindenden Elemente.

Eine solche Lösung wird bereits in vollem Umfang der Aufgabenstellung gerecht.

Darüber hinaus ist zu bemerken, daß durch die erfindungsgemäße Vorrichtung zur Herstellung einer Verbindung zwischen zwei pneumatischen Saugförderleitungen der Aufbau und Betrieb von Saugförderlagen bei hoher wirtschaftlichkeit technisch vereinfacht wird.

Eine mögliche Ausbildung des Verbindungswagens sieht vor, daß dieser durch einen im wesentlichen rechteckigen Tragrahmen gebildet ist, der parallel zu seinen Schmalseiten an mit seiner zu den Unterrollen gerichteten Ebene, mittels zwei bündig abschließenden, zwischen den Längsträgern des Rahmens angeordneten Tragprofilen zur Verbindung mit einer darunter angeordneten Rechteckplatte versehen ist, deren Länge etwa dem um den Durchmesser der Unterrollen und die doppelte Dicke des Abdeckbandes reduzierten Maß des Achsabstandes de Unterrollen und deren Breite etwa dem Breitenmaß der ersten Saugförderleitung entspricht,

daß der im Verbindungswagen angeordnete, die zweite Saugförderleitung tragende Übergabekasten im wesentlichen aus einem sich an der zweiten Saugförderleitung anschließenden, in Saugrichtung einseitig geöffneten rechteckigen Anschlußsangrohr mit einem dieses umfassenden Tragflansch sowie aus der zugeordneten, mit einer Ausnehmung versehenen Rechteckplatte besteht, hierbei der Tragflansch und die Rechteckplatte mittels Spannelemente durch ein flexibles Übergangsstück verbunden sind, und im weiteren an die der Ausnehmung der Recheckplatte ein zu den Saugöffnungen der ersten Saugförderleitung hingerichteter Verschleißschutzkasten angeschlossen ist, daß die achsparallel zu den Unterrollen vorgesehene Umlenkstelle durch zwei in einer parallelen Ebene zu den Achsen der Unterrollen angeordnete Oberrollen gebildet ist, deren Achsabstand so abgestimmt ist, daß die beiden zur Umlenkstelle auf und ab steigenden Trums des flexiblen Abdeckbandes senkrecht zu der durch die Achsen der Unterrollen gebildeten Ebene in die durch die Oberrollen gebildete Ebene verlaufen.

Eine solche Ausbildung gibt ausreichenden Raum für die mit einer zusätzlichen Stabilisierung des Verbindungswagens durch die im Rahmen angeordneten Tragprofile und die mit diesen verbundenen Rechteckplatte elastische Anordnung des Übergabekastens und für die einwandfreie Führung des Verschleißschutzkastens als quasi-Gleitführung für die Saugverbindung mit einem Teil der Saugöffnungen.

Im weiteren wird im Interesse einer exakten Führungsmöglichkeit des Verbindungswagens vorgeschlagen, daß die erste Saugförderleitung ein Rechteckrohr ist.

Durch die empfohlene Beschränkung auf eine Rechteckrohr vereinfachen sich die Führungsprobleme des Verbindungswagens und der Abdichtung.

Im Falle der Verwendung eines Rechteckrohres als erste Saugluftförderleitung wird vorgeschlagen, daß die Führung des Verbindungswagens auf der ersten, rechteckigen Saugluftförderleitung durch vier mit dem Rahmen verbundene Rollenträger erfolgt, die jeweils zwei in höhenversetzten Ebenen angeordnete Führungsrollen tragen, wobei die im Bereich des Abdeckbandes vorgesehenen Kleineren Führungsrollen die Führung des Abdeckbandes und die im Bereich der halben Höhe des Querschnittes der rechteckigen Saugförderleitung angeordneten Führungsrollen die Führung des Verbindungswagens übernehemen.

Durch die mit diesem Vorschlag empfohlene separate Führung des Abdeckbandes und des Verbindungswagens wird eine sichere Lage des Abdeckbandes und damit die Aufrechterhaltung einer einwandfreien Ventildichtung erreicht.

Zur Verhinderung eines störenden Luftmengenanstieges durch das Einsaugen der Umgebungsluft wird vorgeschlagen, daß die Rechteckplatte entlang ihrer Längsbegrenzungen über Spannelemente beidseitig mit je einem flexiblen Seitenstreifen verschen ist, dessen Länge knapp dem Achsabstand der Unterrollen entspricht, und der bei beidseitiger Berücksichtigung der Umlenkperipherie des Abdeckbandes etwa über ein Viertel bis zur Hälfte der Höhe der ersten Saugförderleitung abdichtend anliegt, und

daß die Rechteckplatte entlang ihrer schmalseitigen Begrenzungen jeweils parallel zu den beiden senkrecht zur Ebene der Achse der Unterrollen verlaufenden Trums des Abdeckbandes, deren Innenseiten anlaufend zugerichtet, mit einer Banddichtungszunge verbunden ist, wobei die Seitenstreifen und die Banddichtungszungen gemeinsam eine äußere Dichtungssperre bilden.

In diesem Zusammenhang ist es selbstverständlich, daß die Seitenstreifen und die Banddichtungszungen eine zwar ausreichende, aber beschränkte Elastizität aufweisen müssen, um ein Einziehen dieser Teile in Richtung des Verschleißschutzkastens zu vermeiden. Die Auswahl des hierzu zu verwendenden Werkstoffes und seiner physikalischen Eigenschaften hat in Abstimmung mit der Größe der unabgestützten Flächen und der Saugleistung zu erfolgen.

Die Erfindung wird durch die beigefügte Zeichnung einer beispielsweisen Ausbildung näher erläutert.

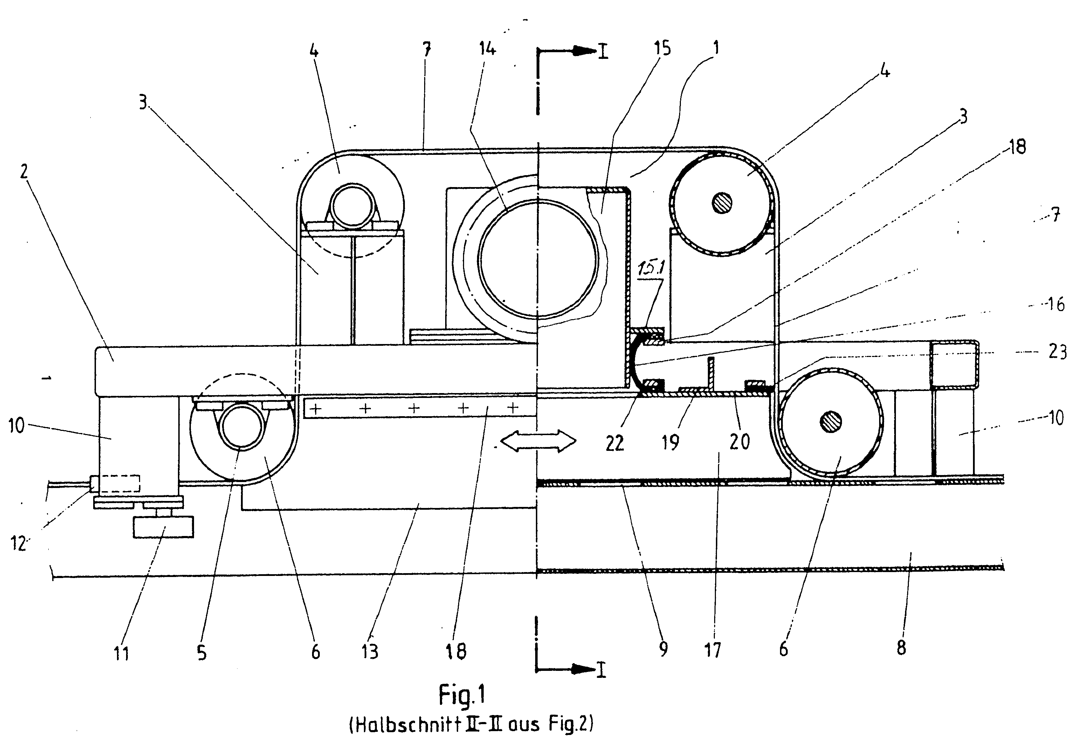

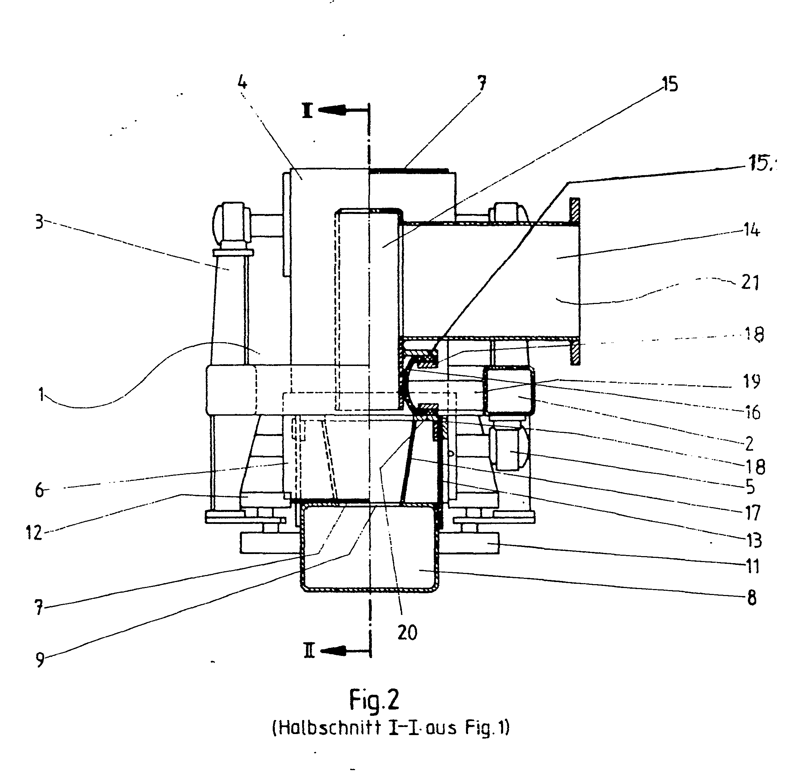

Figur 1 zeigt im Aufriß (Schnitt II-II v. Fig. 2) die mit einem flexiblen Abdeckband belegte und mit Öffnungen versehene erste Förderleitung und den diesem Abdeckband aufstehenden, die flexible Abdeckung über die Länge des Radstandes abhebenden Verbindungswagen.

Figur 2 zeigt den Schnitt I-I durch Figur 1, die Anordnung und Ausbildung des Übergabekastens zwischen der ersten Saugförderleitung innerhalb des Verbindungswagens.

Die beiden Saugförderleitungen 8 und 14 sind durch den im Verbindungswagen 1 angeordneten, aus einer Mehrzahl von später zu erläuternden, die zweite Förderleitung 14 jedoch einschließenden, zusammengesetzten Teilen 13 bis 20 gebildeten Übergabekasten 21 miteinander verbunden.

Der Verbindungswagen 1 steht mit seinen, durch Tragrahmen 2 und Hängelager 5 getragenen Unterrollen 6 dem der ersten Förderleitung 8 aufliegenden flexiblen Abdeckband 7 auf. Das Abdeckband 7 wird über die je eine Umlenkstelle bildenden, in einer parallelen Ebene zu der Anordnung der Unterrollen 6 auf den Rollenbockträgern 3 angeordneten Oberrollen 4 getragen, wobei der Achsabstand und die Anordnung der Oberrollen 4 im Falle dieses Beispieles so gewählt ist, daß bei einer mit den Unterrollen 6 identischen Rollengröße der Oberrollen 4 ein senkrechter Verlauf des von der ersten Förderleitung 8 ansteigenden und zu dieser zurücklaufenden Trums des Abdeckbandes 7 gegeben ist. Die Förderleitung 8 wird durch ein Rechteckrohr gebildet und ist auf seiner zu den Unterrollen 6 gerichteten Ebene mit Saugöffnungen 9 versehen, deren Abdeckung durch das flexible Abdeckband 7 über die mit dem Achsabstand der Unterrollen 6 identische Wegstrecke aufgehoben ist.

Die Führung des Verbindungswagens 1 auf der rechteckigen Förderleitung 8 wird durch mit dem Rahmen 2 verbundene vier Rollenträger 10 übernommen, wobei jeder Rollenträger 10 mit einer Führungsrolle für den Wagen 1 und einer kleineren Führungsrolle 12 für das flexible Abdeckband 7 ausgerüstet ist.

Zur weiteren Ausbildung des Verbindungswagens 1 bzw. des von ihm aufgenommenen Übergabekastens 21, der sich aus den Teilen 14 bis 20 zusammensetzt, wird festgehalten, daß senkrecht zu den längs gerichteten Trägern des Tragrahmens 2 zwei zur Rahmenlänge symmetrisch angeordnete Tragprofile als Tragwinkel 19 so angeordnet sind, daß die mit ihrem parallel zu der unteren Rahmenbegrenzung verlaufenden Schenkel bündig mit diesem abschließt.

Den Tragwinkeln 19 ist eine unter diesen liegende Rechteckplatte 20 verbunden, deren Längenmaß etwas geringer als der Abstand der senkrecht verlaufenden Trums des Abdeckbandes 7 ist und dessen Breitenmaß der Breite der rechteckigen Saugförderleitung 8 entspricht.

Die Rechteckplatte 20 ist entlang ihren seitlichen Längsbegrenzungen über Spannelement 18 mit flexiblen Seitenstreifen 13 versehen, deren Länge knapp dem Achsabstand der Unterrollen 6 entspricht und die der nach unten gerichteten Umlenkperipherie des Abdeckbandes 7 beidseitig angepaßt sind. Diese seitliche Abdichtung durch die flexiblen Seitenstreifen 13 wird durch je eine parallel zu den beiden Trums des Abdeckbandes 7 gerichtete, entlang der Schmalseite der Rechteckplatte verlaufende und an dieser befestigten Banddichtzunge 23 ergänzt.

Die Rechteckplatte 20 ist mit einer ebenfalls rechteckigen Ausnehmung 22, deren Querschnitt größer als der des rechteckigen Anschlußsaugrohres 15 an die zweite Saugförderleitung 14 ist, versonen, wobei die Ausnehmung 22 für die Durchführung des Sauggutes aus der zweiten Saugförderleitung 14 in Richtung der ersten Saugförderleitung 8 vorgesehen ist.

Die Saugförderleitung 14 und das mit ihr verbundene, nach oben abgeschlossene, durch einen Tragflansch 15.1 umfaßte Rechteckrohr 15 wird durch ein sich auf dem Tragflansch 15.1 und der Rechteckplatte 20 durch Spannelemente 18 verbundenes flexibles Übergangstück 16 getragen.

Die Flexibilität dieses Teiles sichert eine ausreichende Beweglichkeit bei der Herstellung weiterführender, von der zweiten Saugförderleitung 14 abgehender Verbindungen.

Der Ausnehmung 22 der Rechteckplatte 20 ist der leicht trichterförmig eingezogene Verschleißschutzkasten 17 angeschlossen.

Ergänzend ist in diesem Zusammenhang zu erwähnen, daß der Achsabstand der Unterrollen praktisch beliebig wählbar ist, wobei selbstverständlich mit vergrößertem Abstand der Anspruch an die Qualität der Abdichtungen bleibt. Der Verbindungswagen 1 kann über eine beliebig lange Saugförderleitung 8 verfahrbar sein, d.h. er ist durch keine vorgegebene Tragkonstruktion bestimmt. Selbstverständlich dürfen die verbindenden Stoßstellen des Rohres der Verfahrbarkeit nicht hindernd entgegenstehen.

## Patentansprüche

1. Vorrichtung zur Herstellung einer Verbindung zwischen zwei pneumatischen Saugförderleitungen (8, 14), die in beliebigem Winkel zueinander angeordnet sind, dadurch gekennzeichnet,

daß eine erste der beiden Saugförderleitungen (8/14) als ein gerades, mit einer nach oben gerichteten planen oder leicht gewölbten Fläche ausgerüstetes Rohr (8), das mit einer Vielzahl von Öffnungen (9) versehen ist, ausgebildet ist,

daß die Öffnungen (9), in Verbindung mit einer systembedingten Unterdruckeinstellung, durch ein flexibles Abdeckband (7) abgedichtet sind,

daß ein die zweite Saugförderleitung (14) tragender Verbindungswagen (1) mit seinen beiden Unterrollen (6) auf dem Abdeckband (7) aufsteht und dieses über "zumindest eine achsparallele Umlenkstelle in einem den beiden Unterrollen (6) entsprechenden Wegstreckenmaß abhebt,

daß die zweite Saugförderleitung (14) in dem zwischen den Unterrollen (6) und der (den) achsparallelen Umlenkstelle(n) gebildeten Freiraum über mechanische oder elastische Glieder beweglich angeordnet ist und durch Gleitführungen mit einem Teil der Saugöffnungen (9) in Verbindung steht, und

daß der Verbindungswagen (1) längs der Achse der ersten Förderleitung (8) ohne Unterbrechung des Unterdruckes an jede beliebige Stelle dieser Saugförderleitung (8) verfahrbar ist.

2. Vorrichtung nach Anspruch 1. dadurch gekennzeichnet,

daß der Verbindungswagen (1) durch einen im wesentlichen rechteckigen Tragrahmen (2) gebildet ist, der parallel zu seinen Schmalseiten an mit seiner zu den Unterrollen (6) gerichteten Ebene, mittels zwei bündig abschließenden, zwischen den Längsträgern des Rahmens (2) angeordneten Tragprofilen (19) zur Verbindung mit einer darunter angeordneten Rechteckplatte (20) versehen ist, deren Länge etwa dem um den Durchmesser der Unterrollen (6) und die doppelte Dicke des Abdeckbandes (7) reduzierten Maß des Achsabstandes der Unterrollen (6) und deren Breite etwa dem Breitenmaß der ersten Saugförderleitung (8) entspricht,

daß der im Verbindungswagen (1) angeordnete, die zweite Saugförderleitung (14) tragende Übergabekasten (21) im wesentlichen aus einem sich an der zweiten Saugförderleitung (14) anschließenden in Saugrichtung einseitig geöffneten rechteckigen Anschlußsaugrohr (15) mit einem dieses umfassenden Tragflansch (15.1) sowie aus der zugeordneten, mit einer Ausnehmung (22) versehenen Rechteckplatte (20) besteht, hierbei der Tragflansch (15.1) und die Rechteckplatte (20) mittels Spannelemente (18) durch ein flexibles Übergansstück (16) verbunden sind, und im weiteren an die Ausnehmung (22) der Rechteckplatte (20) ein zu den Saugöffnungen (9) der ersten Saugförderleitung (8) hin gerichteter Verschleißschutzkasten (17) angeschlossen ist,

daß die achsparallel zu den Unterrollen (6) vorgesehene Umlenkstelle durch zwei in einer parallelen Ebene zu den Achsen der Unterrollen (6) angeordnete Oberrollen (4) gebildet ist, deren Achsabstand so abgestimmt ist, daß die beiden zur Umlenkstelle auf und ab steigenden Trums des flexiblen Abdeckbandes (7) senkrecht zu der durch die Achsen der Unterrollen (6) gebildeten Ebene in die durch die Oberrollen (4) gebildete Ebene verlaufen.

3. Vorrichtung nach Anspruch 1. oder 2., dadurch gekennzeichnet,

daß die erste Saugförderleitung (8) ein Rechteckrohr ist.

4. Vorrichtung nach Anspruch 3, dadurch gekennzeichnet,

daß die Führung des Verbindungswagens (1) auf der ersten, rechteckigen Saugluftförderleitung (8) durch vier mit dem Rahmen (2) verbundene Rollenträger (10) erfolgt, die jeweils zwei in höhenversetzten Ebenen angeordnete Führungsrollen (11/12) tragen, wobei die im Bereich des Abdeckbandes (7) vorgesehenen kleineren Führungsrollen (12) die Führung des Abdechbandes und die im Bereich der halben Höhe des Querschnittes der rechteckigen Saugförderleitung (8) angeordneten Führungsrollen (11) die Führung des Verbindungswagens (1) übernehmen.

5. Vorrichtung nach einem der Ansprüche 1-3, dadurch gekennzeichnet,

daß die Rechteckplatte (20) entlang ihrer Längsbegrenzungen über Spannelemente (18) beidseitig mit je einem flexiblen Seitenstreifen (13) versehen ist, dessen Länge knapp dem Achsabstand der Unterrollen (6) entspricht, und der bei beidseitiger Berücksichtigung der Umlenkperipherie des Abdeckbandes (7) etwa über ein Viertel bis zur Hälfte der Höhe der ersten Saugförderleitung (8) abdichtend anliegt, und

daß die Rechteckplatte (20) entlang ihrer schmalseitigen Begrenzungen jeweils parallel zu den beiden senkrecht zur Ebene der Achse der Achse der unterrollen (6) verlaufenden Trums des Abdeckbandes (7), deren Innenseiten anlaufend zugerichtet, mit einer Banddichtungszunge (23) verbunden ist, wobei die Seitenstreifen (13) und die Banddichtungszungen (23) gemeinsam eine äußere Dichtungssperre (13/23) bilden.

## Claims

1. A device for establishing a connection between two pneumatic suction conveyor pipes (8/14) which are disposed relative to one another at any desired angle, characterized in

that a first of the two suction conveyor pipes (8/14) is formed as a straight-lined tube (8) comprising an upwardly directed planar or slightly curved surface and being provided with a multiplicity of apertures (9),

that the apertures (9) in conjunction with a system-conditional vacuum setting, are sealed by a flexible masking tape (7),

that a connecting carriage (1) carrying the second suction conveyor pipe (14) with the two bottom rollers (6) thereof is mounted on the masking tape (7), lifting the same via at least one axially parallel deflection point in a length of path corresponding to the two lower rollers (6),

that the second suction conveyor pipe (14), in the free space provided between the lower rollers (6) and the axially parallel deflection point(s), via mechanical or flexible members, is movably disposed and, via sliding guidances, is in communication with a part of the suction apertures (9),

that the connecting carriage (1), along the axis of the first suction conveyor pipe (8) is movable at any desire, point of the said suction conveyor pipe (8) with no interruption of the vacuum.

2. A device according to claim 1, characterized in

that the connecting carriage (1) is formed by a substantially rectangular support frame (2) which, in parallel to its narrow sides at the plane thereof directed toward the bottom rollers (6), is provided with two flush-mounted supporting profiles (19) disposed between the longitudinal supports of the frame (2) for connection to a rectangular plate (20) disposed therebelow, the length of which corresponds approximately to the amount of the axle distance of the bottom rollers (6) reduced by the diameter of the bottom rollers (6) and the double thickness of the masking tape (7), and the width of which corresponds approximately to the scale of width of the first suction conveyor pipe (8),

that the transfer box (21) located in the connecting carriage (1) and carrying the second suction conveyor pipe (14), substantially, is composed of a rectangular connecting suction tube (15) coupled to the second suction conveyor pipe (14) and opened at one side in the suction direction, including a supporting flange (15.1) embracing the tube, and of the associated rectangular plate (20) provided with a recess (22), with the supporting flange (15.1) and the rectangular plate (20) being connected by clamping elements (18) through a flexible transfer element (16), and with a wear protection box (17) directed toward the suction apertures (9) of the first suction conveyor pipe (8) being connected to the recess (22) of the rectangular plate (20),

that the deflection point axially parallel to the lower rollers (6) is formed by two upper rollers (4) located in a plane parallel to the axles of the lower rollers (6), with the axle distance thereof being so selected that the two sides of the flexible masking belt (7) rising and lowering relative to the deflection point extend normal to the plane formed by the axles of the bottom rollers (6) into the plane formed by the upper rollers (4).

3. A device according to claims 1 or 2, characterized in that the first suction conveyor pipe (8) is a rectangular tube.

4. A device according to claim 3, characterized in

that the guidance of the connecting carriage (1) on the first rectangular suction air conveyor pipe (8) is effected by four roller carriers (10) connected to the frame (2) and carrying respectively two guide rollers (11/12) located in planes offset in elevation, with the smaller guide rollers (12) provided in the area of the masking belt (7) taking over the guidance of the masking belt and the guide rollers (11) disposed in the area of half the height of the cross-section of the rectangular suction conveyor pipe (8) taking over the guidance of the connecting carriage (1).

5. A device according to any one of claims 1 to 3, characterized in

that the rectangular plate (20), along the longitudinal delimitations thereof, via clamping elements (18), at both sides is provided with respectively one flexible side strip (13), the length of which narrowly correpsonds to the axle distance of the lower rollers (6), with the strip, in both-sided consideration of the deflection periphery of the masking belt (7) being in sealingly abutting relationship approximately across one fourth to one half of the elevation of the first suction conveyor pipe (8), and

that the rectangular plate (20) along the narrow-sided delimitations thereof, respectively in parallel to the two sides of the masking belt (7) extending normal to the plane of the axles of the lower rollers (6) in a manner proceeding toward the inner sides thereof, is connected to a belt sealing tongue (23), with the side strips (13) and the belt sealing tongues (23) jointly forming an outer sealing lock (13/23).

**Revendications**

1. Dispositif pour établir une connexion entre deux conduites pneumatiques d'aspiration (8, 14) disposées l'un à l'autre à un angle quelconque, caractérisé en ce qu'une première des deux conduites d'aspiration (8/14) est formée comme un tube (8) droit fourni d'une face plane ou légèrement courbée et dirigée vers le haut, tube lequel étant prévu d'une multiplicité d'ouvertures (9),

que les ouvertures (9), en conjonction d'un réglage de dépression conditionnée par le système sont étanchées par une sangle élastique (7),

qu'un chariot de connexion (1) portant la seconde conduite d'aspiration (14) avec ses deux poulies inférieures (6) est monté sur la sangle (7) enlevant la même par au moins un point de guidage parallèle à l'axe dans une mesure de distance correspondante aux poulies inférieures,

que la deuxième conduite d'aspiration (14) est disposée mobilement dans l'espace intermédiaire formé entre les poulies inférieures (6) et le (les) point(s) de guiadage par l'intermédiaire des éléments mécaniques ou élastiques et, par, l'intermédiaire des guidage à gliessière, est en communication avec quelques unes des ouvertures d'aspiration (9), et

que le chariot de connexion (1) le long de l'axe de la première conduite d'aspiration (8) est mouvable à chaque point de cette conduite d'aspiration (8) sans interruption de la dépression.

2. Dispositif selon la revendication 1, caractérisé en ce

que le chariot de connexion (1) est formé par un cadre porteur (2) essentiellement rectangulaire prévu en parallèle à ses petits côtés au plan dirigé vers les poulies inférieures (6) des deux profiles porteurs à fleur entre les supports longitudinaux du cadre (2) pour établir connexion avec une plaque rectangulaire (20) disposée au dessous, la longeur de laquelle corresponde à peu près à la mesure de l'écartement des essieux des poulies inférieures (6) réduite par le diamètre des poulies inférieures (6) et la double épaisseur de la sangle (7), et la largeur de laquelle corresponde à peu près à la mesure de largeur de la première conduite d'aspiration (8),

que le coffre de transfer (21) disposé dans le chariot de connexion (1) et portant la deuxième conduite d'aspiration (14) essentiellement est formé par un tube d'aspiration de connexion rectangulaire (15) se couplant à la deuxième conduite d'aspiration (14) et étant ouvert à l'un côté, en sens d'aspiration, et ayant un rebord porteur (15.1) environnant le tube, et par une plaque rectangulaire (20) associée et prévue d'un évidement (22), le rebord porteur (15.1) et la plaque rectangulaire (20 étant reliés par l'intermédiaire des éléments de serrage (18) par un élément de transfer (16) élastique, et qu'un coffre protecteur d'usure (17) est relié à l'évidement (22) de la plaque rectangulaire (20) dirigé vers les ouvertures d'aspiration (9) de la première conduite d'aspiration (8)

que le point de guidage prévu dans une manière parallèle aux essieux des poulies inférieures (6) est formé par deux poulies supérieures (4) disposées dans un plan parallèle aux essieux des poulies inférieures (6), l'écartement des essieux étant tellement adjusté que les deux boûts de la sangle (7) élastique ascendant et descendant au point de guidage s'ètendent perpendiculairement au plan formé par les essieux des poulies inférieures (6) dans le plan formé par des poulies (4) supérieures.

3. Dispositif selon les revendications 1 ou 2, caractérisé en ce

que la première conduite d'aspiration (8) est un tube rectangulaire.

4. Dispositif selon la revendication 3, caractérisé en ce

que le guidage de chariot de connexion (1) est effectué sur la première conduite d'aspiration (8) rectangulaire par quatre poulies porteuses (10) reliées au cadre (2) chaque portant deux poulies de guidage (11/12) disposées aux plans déplacés en hauteur, les poulies de guidage (12) plus petites prévues dans la zone de la sangle (7) effectuant le guidage des sangles et les poulies de guidage (11) disposées dans la zone à l'hauteur demie du diamètre de la conduite d'aspiration (8) effectuant le guidage du chariot de connexion (1).

5. Dispositif selon une des revendications 1 à 3, caractérisé en ce

que la plaque rectangulaire (20) le long de ses délimitations longitudinales, par l'intermédiaire des éléments de serrage (18), à deux côtés, est prévue d'une bande latérale (13) élastique la longeur de laquelle corresponde tout juste à l'écartement des essieux des poulies (6) inférieures, bande laquelle, prise en considération la périphérie de guidage de la sangle (7) à deux côtés, est adjacente dans une manière étanche à peu près à travers d'un quart ou à la moîtié de la hauteur de la première conduite d'aspiration (8), et

que la plaque rectangulaire (20) le long des petits côtés de ses délimitations est reliée en parallèle aux deux boûts de la sangle (7) s'étendant verticalement au plan des essieux des poulies inférieures (6) abordant les faces intérieures, à une langue d'étanchéité (23) de bande, les bandes latérales (13) et les langues d'étanchéité (23) de bande formant en commun un arrêt d'étanchéité extérieur (13/23).

Fig.1
(Halbschnitt II-II aus Fig.2)

Fig.2
(Halbschnitt I-I aus Fig.1)